**Europäisches Patentamt**

**European Patent Office**

**Office européen des brevets**

(11) Veröffentlichungsnummer : **0 395 665 B1**

(12) **EUROPÄISCHE PATENTSCHRIFT**

(45) Veröffentlichungstag der Patentschrift :
08.07.92 Patentblatt 92/28

(51) Int. Cl.⁵ : **G01B 7/30,** G01L 3/10

(21) Anmeldenummer : **88909080.9**

(22) Anmeldetag : **26.10.88**

(86) Internationale Anmeldenummer :
**PCT/DE88/00658**

(87) Internationale Veröffentlichungsnummer :
**WO 89/04457 18.05.89 Gazette 89/11**

(54) **MESSEINRICHTUNG ZUR BESTIMMUNG DES DREHMOMENTS EINES ROTIERENDEN MASCHINENTEILS.**

(30) Priorität : **06.11.87 DE 3737696**

(43) Veröffentlichungstag der Anmeldung :
**07.11.90 Patentblatt 90/45**

(45) Bekanntmachung des Hinweises auf die
Patenterteilung :
**08.07.92 Patentblatt 92/28**

(84) Benannte Vertragsstaaten :
**DE FR GB IT SE**

(56) Entgegenhaltungen :
**DE-A- 3 500 134**

(56) Entgegenhaltungen :
**DE-C- 2 951 148**
**US-A- 2 403 952**
**US-A- 3 728 896**
**US-A- 4 135 390**

(73) Patentinhaber : **ROBERT BOSCH GMBH**
**Postfach 30 02 20**
**W-7000 Stuttgart 30 (DE)**

(72) Erfinder : **FRISTER, Frank**
**Im Wolfsgalgen 29**
**W-7141 Schwieberdingen (DE)**
Erfinder : **PFEFFER, Peter**
**Am unteren Haldenrain 7**
**W-7128 Lauffen/Neckar (DE)**

## Beschreibung

### Stand der Technik

Die Erfindung geht aus von einer Meßeinrichtung nach der Gattung der unabhängigen Ansprüche 1 und 2. Aus der DE-A-35 00 134 ist eine derartige Meßeinrichtung bekannt, bei der eine Nabe mit einem Bauteil, dessen Drehmoment bestimmt werden soll, verbunden ist. Mit Hilfe einer Anzahl von Speichen ist die Nabe mit einem Ring verbunden. Ferner erstreckt sich ein Arm radial von der Nabe weg und kooperiert mit einem Weggeber, um den Betrag der Drehung der Nabe mit Bezug auf den Ring zu messen und so das Drehmoment zu bestimmen. Das Drehmoment wird mit Hilfe des Arms in eine proportionale Wegstrecke umgelenkt, und diese Wegstrecke wird vom Weggeber erfaßt. Die Meßeinrichtung baut aber relativ aufwendig und ist störanfällig.

Eine in der DE-C 29 51 148 beschriebene Meßeinrichtung hat zwei zu einer Welle koaxial angeordnete Körper aus elektrisch leitendem, nicht magnetischem Werkstoff, die beide drehfest mit der Welle verbunden sind und gegeneinander verdrehbar sind. Weiterhin ist eine zur Welle koaxiale Spule vorgesehen, die von hochfrequentem Wechselstrom durchflossen und in unmittelbarer Nähe der beiden Körper angeordnet ist. Diese weisen Ausschnitte auf, deren gemeinsame Überdeckungsfläche mit zunehmendem, zwischen den Körpern auftretenden Verdrehwinkel sich ändert, wobei zur Messung der Impedanzänderung der Spule, die durch in den Körpern induzierte Wirbelströme entsteht, die Relativverdrehung der beiden Körper erfaßbar ist. Zur Erzeugung dieser Relativverdrehung ist in axialer Richtung der Welle ein Torsionsstab angeordnet, wodurch die Meßeinrichtung relativ lang baut.

### Vorteile der Erfindung

Die erfindungsgemäße Meßeinrichtung mit den kennzeichnenden Merkmalen der unabhängigen Ansprüche 1 und 2 hat demgegenüber den Vorteil, daß sie relativ kurz baut und bei relativ beengten Einbauverhältnissen verwendet werden kann. Bei relativ einfachem Aufbau und kompakter Bauweise ist eine genaue Erfassung des antreibenden bzw. abtreibenden Moments (Drehmoments) möglich.

Durch die in den abhängigen Ansprüchen aufgeführten Maßnahmen sind vorteilhafte Weiterbildungen und Verbesserungen der in den unabhängigen Ansprüchen 1 und 2 angegebenen Merkmale möglich. Mit Hilfe der Anschläge können unzulässig hohe Momente von den Biegestäben ferngehalten werden, wodurch ein Überlastschutz erreicht wird.

### Zeichnung

Ein Ausführungsbeispiel der Erfindung ist in der Zeichnung dargestellt und in der nachfolgenden Beschreibung näher erläutert. Es zeigen Figur 1 einen Längsschnitt durch einen Drehmomentsensor, Figur 2 einen Schnitt in Richtung II, Figur 3 eine Draufsicht auf eine Schlitzscheibe des Drehmomentsensors, Figur 3a und Figur 3b je eine Abwandlung einer Schlitzscheibe und Figur 4 eine Darstellung des Torsionselements in Grundstellung und im tortierten Zustand.

### Beschreibung des Ausführungsbeispiels

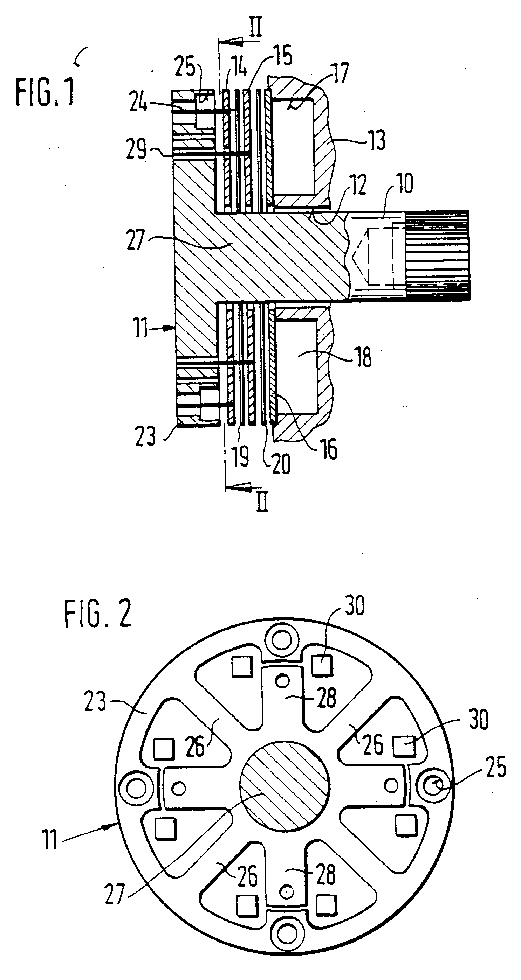

In Figur 1 ist mit 10 eine Welle bezeichnet, die an einem Ende einen Flansch 11 aufweist und mit ihrem anderen Ende durch eine Bohrung 12 eines Gehäuses 13 ragt. Zwischen dem Flansch 11 und dem Gehäuse 13 sind zwei Schlitzscheiben 14, 15 konzentrisch zu der Welle 10 angeordnet. Den Stirnseiten der Schlitzscheiben 14, 15 zugewandt, ist am Gehäuse 13 eine Flachspule 16 befestigt. Statt einer Flachspule 16 ist auch eine andere Spulenform denkbar, wobei die Flachspule 16 aber besonders kompakt und raumsparend baut. Ferner ist im Gehäuse 13 eine zu den Schlitzscheiben 14, 15 hin offene Ausnehmung 17 ausgebildet, in der eine Sensorelektronik 18 zur Auswertung der an der Flachspule 16 abgegriffenen Meßsignale angeordnet ist. Die Schlitzscheiben 14, 15 sind aus einem elektrisch leitenden, nicht magnetischen Werkstoff hergestellt oder mit einer Schicht aus diesem Werkstoff überzogen. Zwischen den beiden Schlitzscheiben 14, 15 und zwischen der Schlitzscheibe 15 und der Flachspule 16 befindet sich je eine Gleitzwischenlage 19 bzw. 20.

Der Flansch 11 ist als Speichenrad ausgebildet. Er weist einen äußeren Kranz 23 auf, der über ein Verbindungsteil 24 starr mit der Schlitzscheibe 14 verbunden ist. Ferner sind im Kranz 23 im Abstand von ca. 90° mehrere durchgehende Bohrungen 25 ausgebildet, über die z.B. ein nicht dargestellter Elektromotor angeflanscht werden kann. Dadurch kann auf den Kranz 23 ein Antriebsdrehmoment eingeleitet werden. Nur jede zweite Speiche 26 des Speichenrads ist fest mit der Nabe 27 und dem Kranz 23 verbunden und dient somit als Biegestab. Die übrigen Speichen 28 sitzen zwar fest auf der Nabe 27 auf, sind aber vom Kranz 23 getrennt.

Diese Speichen 28 sind mit der Schlitzscheibe 15 starr verbunden. Hierzu ist an dem dem Kranz 23 zugewandten Ende der Speichen 28 in einer Bohrung ein Verbindungsteil 29 befestigt. Die Schlitzscheibe 15 kann aber auch mit der Welle 10 direkt verbunden sein.

Die Speichen 28 mit dem einen freien Ende sind dicker ausgebildet als die Speichen 26, so daß sie eine hohe mechanische Biegefestigkeit aufweisen. Im Bereich der freien Enden der Speichen 28 befinden sich in Drehrichtung gesehen links und rechts der Enden Anschläge 30. Die Anschläge 30 sind so angeordnet, daß ein Verdrehwinkel der Speiche 28 vom ca. 0,3 bis 0,7° möglich ist.

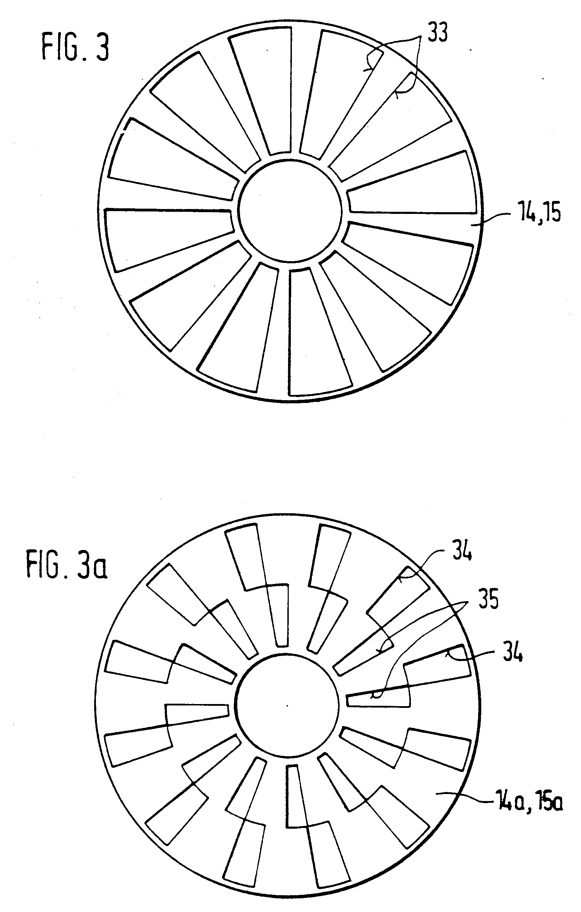

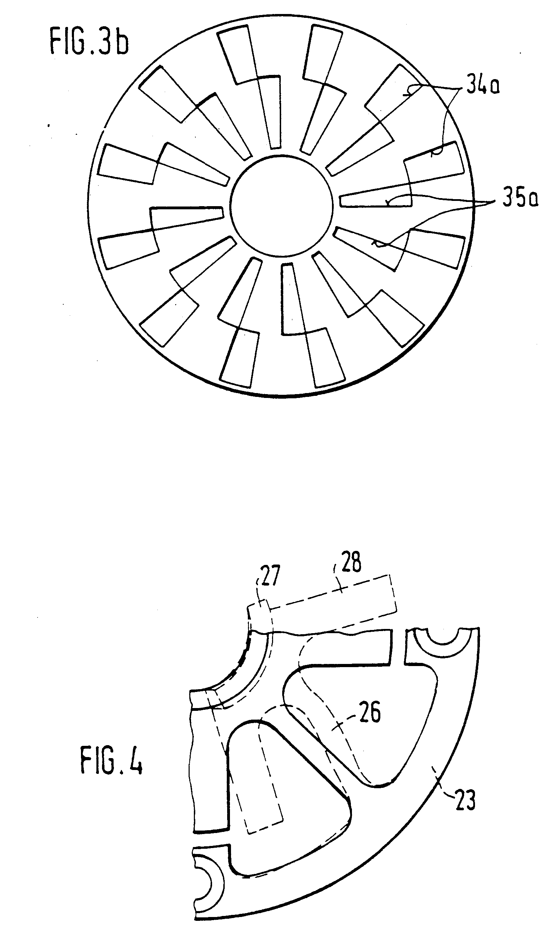

In Figur 3 ist eine Draufsicht auf eine Schlitzscheibe 14 bzw. 15 dargestellt. Die Schlitzscheibe weist mehrere radiale Schlitze 33 auf, die im gleichen Winkelabstand zueinander angeordnet sind und gleiche Winkelgröße aufweisen.

Bei der Darstellung der Schlitzscheibe 14a bzw. 15a in Figur 3a weisen die Schlitze 34, 35 gegenüber der Ausführung in Figur 3 jeweils nur die halbe radiale Länge aber wieder gleiche Winkelgröße auf. Ferner sind die Schlitze 34, 35 so gegeneinander versetzt, daß sich jeweils maximal die Kanten der Schlitze überdecken. Bei dieser Ausbildung der Schlitzscheibe 14a bzw. 15a ist für jede Schlitzreihe 34 bzw. 35 eine Spule notwendig. Diese beiden Spulen sind elektrisch in Reihe geschaltet, so daß eine Differenzschaltung der beiden Meßsignale möglich ist. Hierbei ist eine der beiden Schlitzscheiben entsprechend der Figur 3, die andere entsprechend Figur 3a auszubilden. Durch die versetzte Ausbildung der Schlitzreihen 34 und 35 und den beiden Spulen ist es möglich, zu erkennen, ob ein links- oder rechtsdrehendes Moment gemessen wird. In der Figur 3b sind die Schlitze 34a, 35a im Unterschied zur Figur 3a flächengleich ausgebildet.

Wird auf den Flansch 11 ein Drehmoment M1, z.B. ein Antriebsdrehmoment eingeleitet, so kann über die Welle 10 ein Drehmoment M2, ein sogenänntes Abtriebsdrehmoment abgegriffen werden, wodurch die als Biegestäbe dienenden Speichen 26 geringfügig durchgebogen werden. In Figur 4 ist hierzu in ausgezogenen Linien das Speichenrad 11 mit den Speichen 26, 28 in Grundstellung, d.h. mit nicht gebogenen Speichen 26 dargestellt. Mit gestrichelten Linien ist das Speichenrad mit gebogenen Speichen 26 eingezeichnet. Es ist ersichtlich, daß die Speichen 28 propörtional zur Durchbiegung der Speichen 26 bewegt werden. Da die Schlitzscheibe 14 starr mit dem Kranz 23 und die Schlitzscheibe 15 starr mit den Speichen 28 verbunden sind, wird eine Verdrehung der beiden Schlitzscheiben 14, 15 um einen bestimmten Winkel bewirkt. Wird die Spule 16 von einem hochfrequenten Wechselstrom durchflossen, so wird auf der Oberfläche der beiden Schlitzscheiben 14, 15 ein Wirbelstrom erzeugt. Durch das veränderliche Überdeckungsverhältnis der beiden Schlitzscheiben 14, 15 wird die Wirbelstromausbildung erhöht bzw. erniedrigt. Die sich dadurch verändernde Impedanz der Flachspule 16 ist abhängig vom gemessenen Drehmoment. Die so gewonnenen Meßsignale werden der Auswerteschaltung 18 zugeführt, so daß ein angeschlossenes Maschinenteil gesteuert bzw. geregelt werden kann. Die Anschläge 30 dienen als Überlastschutz für die als Biegestäbe ausgebildeten Speichen 26. Wie oben ausgeführt wird bei Einleitung eines bestimmten Antriebsmoments ein entsprechender Verdrehwinkel der Speichen 28 erreicht. Wird aber ein bestimmtes Moment überschritten, so kommen die Speichen 28 an den Anschlägen 30 zum Anliegen. Das zusätzliche Moment wird über die Anschläge 30 übertragen, wodurch unzulässig hohe Momente von den Speichen 26, den Biegestäben, ferngehalten werden. Dadurch ist ein sogenannter Überlastschutz möglich, der ein Brechen der Speichen 26 verhindert.

Besonders vorteilhaft ist eine Anwendung des Drehmomentsensors bei einer elektromotorischen Lenkhilfe für ein Fahrzeug. Die Welle 10 führt dann zum Lenkgetriebe. An dem Flansch 11 ist die Lenkwelle oder ein Servomotor befestigt. Bei Lenkhilfen ist eine besonders kompakte Bauweise notwendig, die durch eine radiale Ausbildung der Biegestäbe ermöglicht wird.

## Patentansprüche

1. Meßeinrichtung zur Bestimmung des Verdrehwinkels oder Drehmoments eines rotierenden Maschinenteils mit einem als Speichenrad ausgebildeten Torsionselement (11), das mindestens einen in radialer Richtung verlaufenden Biegestab (26) aufweist, wobei ein abhängig von der Biegung der Biegestäbe (26) bewegter Meßgeber (14, 15) mit einem Körper (28) in Wirkverbindung steht, dadurch gekennzeichnet, daß der Meßgeber aus einem ersten Meßelement (14) und einem zweiten Meßelement (15) besteht, daß das Speichenrad mindestens eine ein freies Ende aufweisende Speiche (28) hat, die mit dem zweiten Meßelement (15) verbunden ist, daß das erste Meßelement (14) mit einem starren Teil (23) des Speichenrads verbunden ist, daß die Meßelemente Scheiben (14, 15) sind, die mindestens eine Schicht aus elektrisch leitendem, nicht magnetischem Werkstoff und in regelmäßigem bestand Bereiche (33) aus elektrisch nicht leitendem Werkstoff aufweisen, und daß abhängig von der relativen Stellung der Meßelemente (14, 15) zueinander die Impedanz mindestens einer Spule (16) verändert wird.

2. Meßeinrichtung zur Bestimmung des Verdrehwinkels oder Drehmoments eines rotierenden Maschinenteils mit einem als Speichenrad ausgebildeten Torsionselement (11), das mindestens einen in radialer Richtung verlaufenden Biegestab (26) aufweist, wobei ein abhängig von der Biegung der Biegestäbe (26) bewegter Meßgeber (14, 15) mit einem Körper (28) in Wirkverbindung steht, dadurch gekennzeichnet, daß der Meßgeber aus einem ersten Meßelement (14) und einem zweiten Meßelement (15) besteht, daß das erste Meßelement (14) mit einem starren Teil (23) des Speicherrads verbunden ist, daß das zweite Meßelement (15) mit der Welle (10) verbunden ist, daß die Meßelemente Scheiben (14, 15) sind, die mindestens eine Scheibe aus elektrisch leitendem, nicht magnetischem Werkstoff und in regelmäßigem Abstand Bereiche (33) aus elektrisch nicht leitendem Werkstoff aufweisen, und daß abhängig von der relativen Stellung der Meßelemente (14, 15) zueinander die Impedanz mindestens einer Spule (16) verändert wird

3. Meßeinrichtung nach Anspruch 1 oder 2, dadurch gekennzeichnet, daß die Bereiche (33) radial verlaufende Schlitze mit gleicher Winkelgröße sind.

4. Meßeinrichtung nach Anspruch 1 oder 2, dadurch gekennzeichnet, daß die Bereiche radial verlaufende Schlitze (34, 35) mit gleicher Winkelgröße sind, die halbe radiale Länge aufweisen und in zwei Ebenen so angeordnet sind, daß sich die Kanten der Schlitze (34, 35) überdecken.

5. Meßeinrichtung nach Anspruch 1 oder 2, dadurch gekennzeichnet, daß die Bereiche radial verlaufende Schlitze (34a, 35a) mit gleicher Winkelgröße sind, die flächengleich sind und in zwei Ebenen so angeordnet sind, daß sich die Kanten der Schlitze (34a, 35a) überdecken.

6. Meßeinrichtung nach einem der Ansprüche 1 bis 5, dadurch gekennzeichnet, daß die Speichen (28) mechanisch fester ausgebildet sind als die Biegestäbe (26).

7. Meßeinrichtung nach einem der Ansprüche 1 bis 6, dadurch gekennzeichnet, daß im Bereich des freien Endes der Speichen (28) Anschläge (30) angeordnet sind.

8. Meßeinrichtung nach einem der Ansprüche 1 bis 7, dadurch gekennzeichnet, daß die Spule (16) von einem hochfrequenten Wechselstrom durchflossen ist.

9. Meßeinrichtung nach einem der Ansprüche 1 bis 8, dadurch gekennzeichnet, daß die Eingangswelle die Lenkwelle eines Fahrzeugs ist und die Ausgangswelle (10) zum Lenkgetriebe führt.

## Claims

1. Measuring device for determining the angle of twist or torque of a rotating machine part, having a torsion element (11) which is constructed as a spoked wheel and has at least one bending rod (26) running in the radial direction, a measuring sensor (14, 15) which is moved as a function of the bending of the bending rods (26) being operatively connected to a body (28), characterised in that the measuring sensor consists of a first measuring element (14) and of a second measuring element (15), in that the spoked wheel has at least one spoke (28) which has a free end and is connected to the second measuring element (15), in that the first measuring element (14) is connected to a rigid part (23) of the spoked wheel, in that the measuring elements are discs (14, 15) which have at least one layer of electrically conductive, non-magnetic material and, at regular intervals, regions (33) of electrically non-conductive material, and in that the impedance of at least one coil (16) is varied as a function of the relative position of the measuring elements (14, 15) to one another.

2. Measuring device for determining the angle of twist or torque of a rotating machine part, having a torsion element (11) which is constructed as a spoked wheel and has at least one bending rod (26) running in the radial direction, a measuring sensor (14, 15) which is moved as a function of the bending of the bending rods (26) being operatively connected to a body (28), characterised in that the measuring sensor consists of a first measuring element (14) and of a second measuring element (15), in that the first measuring element (14) is connected to a rigid part (23) of the spoked wheel, in that the second measuring element (15) is connected to the shaft (10), in that the measuring elements are discs (14, 15) which have at least one disc [sic] of electrically conductive, non-magnetic material and, at regular intervals, regions (33) of electrically non-conductive material, and in that the impedance of at least one coil (16) is varied as a function of the relative position of the measuring elements (14, 15) to one another.

3. Measuring device according to Claim 1 or 2, characterised in that the regions (33) are radially running slots having the same angular size.

4. Measuring device according to Claim 1 or 2, characterised in that the regions are radially running slots (34, 35) having the same angular size, which have half the radial length and are arranged in two levels such that the edges of the slots (34, 35) overlap.

5. Measuring device according to Claim 1 or 2, characterised in that the regions are radially running slots (34a, 35a) having the same angular size, which are of equal area and are arranged in two levels such that the edges of the slots (34a, 35a) overlap.

6. Measuring device according to one of Claims 1 to 5, characterised in that the spokes (28) are of mechanically firmer construction than the bending rods (26).

7. Measuring device according to one of Claims 1 to 6, characterised in that stops (30) are arranged in the region of the free end of the spokes (28).

8. Measuring device according to one of Claims 1 to 7, characterised in that a high-frequency alternating current flows through the coil (16).

9. Measuring device according to one of Claims 1 to 8, characterised in that the input shaft is the steering shaft of a vehicle and the output shaft (10) leads to the steering mechanism.


**Revendications**

1. Installation de mesure pour déterminer l'angle de rotation ou un couple d'une pièce mécanique en rotation à l'aide d'un élément de torsion (11) en forme de roue à rayons ayant au moins une barre de flexion (26) dirigée radialement, et un capteur de mesure (14, 15) déplacé indépendamment de la flexion des barres de flexion (26) coopère avec un organe (28), installation caractérisée en ce que le capteur de valeurs de mesure se compose d'un premier élément de mesure (14) et un second élément de mesure (15), la roue à rayons ayant au moins un rayon (28) à extrémités libres qui est relié au second élément de mesure (15) et en ce que le premier élément de mesure (14) est relié à une partie rigide (23) de la roue à rayons, les éléments de mesure étant des disques (14, 15) ayant au moins une couche d'un matériau conducteur d'électricité mais non magnétique et ayant à des intervalles réguliers, des zones (33) en un matériau électriquement non conducteur, en ce qu'indépendamment de la position relative des éléments de mesure (14, 15), au moins l'impédance d'une bobine (16) est modifiée.

2. Installation de mesure pour déterminer l'angle de rotation ou le couple d'une pièce mécanique en rotation, comportant un élément de torsion (11) en forme de roue à rayons, ayant au moins une barre de flexion (26) dirigée radialement et un capteur de valeurs de mesure (14, 15) déplacé indépendamment de la flexion des barres de flexion (26), ce capteur coopérant avec un organe (28), installation caractérisée en ce que le capteur de valeurs de mesure se compose d'un premier élément de mesure (14) et d'un second élément de mesure (15), le premier élément de mesure (14) étant relié à une partie rigide (23) de la roue à rayons et en ce que le second élément de mesure (15) est relié à l'arbre (10), les éléments de mesure étant des disques (14, 15) formés d'au moins un disque en un matériau conducteur d'électricité, mais non magnétique et ayant des distances régulières, des zones (33) en un matériau électriquement non conducteur, en ce qu'indépendamment de la position relative des éléments de mesure (14, 15) l'impédance d'au moins une bobine (16) varie.

3. Installation de mesure selon la revendication 1 ou 2, caractérisée en ce que les zones (33) ont des fentes radiales de même amplitude d'angle.

4. Installation de mesure selon la revendication 1 ou 2, caractérisée en ce que les zones ont des fentes radiales (34, 35) de même mesure d'angle et qui ont une longueur radiale de moitié et sont disposées dans deux plans de manière que les arêtes des fentes (34, 35) se recouvrent.

5. Installation de mesure selon la revendication 1 ou 2, caractérisée en ce que les zones de fentes (34a, 35a) dirigées radialement, ont la même mesure d'angle et la même surface en étant prévues dans deux plans de manière que les arêtes de fentes (34a, 35a) se recouvrent.

6. Installation de mesure selon l'une des revendications 1 à 5, caractérisée en ce que les rayons (28) sont réalisés de manière à être mécaniquement plus solides que les barres de flexion (26).

7. Installation de mesure selon l'une des revendications 1 à 6, caractérisée en ce qu'au niveau de l'extrémité libre des rayons (28) il y a des butées (30).

8. Installation de mesure selon l'une des revendications 1 à 7, caractérisée en ce que la bobine (16) est traversée par un courant alternatif à haute fréquence.

9. Installation de mesure selon l'une des revendications 1 à 8, caractérisée en ce que l'arbre d'entrée est la colonne de direction d'un véhicule et l'arbre de sortie (10) va à la transmission de la direction.

FIG.1

FIG. 2

6

FIG. 3

33

14,15

FIG. 3a

34

35

34

14a, 15a

FIG.3b

34a

35a

27  28

26

FIG.4

23